(19) Europäisches Patentamt

European Patent Office

Office européen des brevets

(11) Veröffentlichungsnummer: **0 321 892 B1**

(12) **EUROPÄISCHE PATENTSCHRIFT**

(45) Veröffentlichungstag der Patentschrift: **26.02.92**

(21) Anmeldenummer: **88121193.2**

(22) Anmeldetag: **17.12.88**

(51) Int. Cl.⁵: **B29C 55/08**, D06C 3/06

(54) **Breitstreckwalze mit oder ohne elstischen Überzug.**

(30) Priorität: **22.12.87 DE 3743580**

(43) Veröffentlichungstag der Anmeldung:
**28.06.89 Patentblatt 89/26**

(45) Bekanntmachung des Hinweises auf die
Patenterteilung:
**26.02.92 Patentblatt 92/09**

(84) Benannte Vertragsstaaten:
**AT BE ES FR GB GR IT LU NL SE**

(56) Entgegenhaltungen:
**DE-A- 2 514 732**
**DE-A- 3 613 494**
**DE-B- 2 756 745**
**GB-A- 2 021 704**

(73) Patentinhaber: **H. WITTLER GMBH & CO. KG**
**Hellweg 184 -194**
**W-4815 Schloss Holte-Stukenbrock(DE)**

(72) Erfinder: **Scheek, Bernhard**
**Martin-Luther-Strasse 21**
**W-4807 Borgholzhausen(DE)**

(74) Vertreter: **Schirmer, Siegfried, Dipl.-Ing.**
**Patentanwalt Osningstrasse 10**
**W-4800 Bielefeld 1(DE)**

# Beschreibung

Die Erfindung betrifft eine Breitstreckwalze, insbesondere für die Behandlung von Textil-, Papieroder Kunststoffbahnen, bestehend aus einer gebogenen Achse und auf dieser Achse in geringem Abstand angeordneten Rohrabschnitten, die auf flexiblen Stützringen lagern und über axial zwischen den Stützringen angeordnete, auf der Achse fixierbare Wälzlager auf der Achse abgestützt sind, wobei die Achse zur Führung eines Kühlmediums als Hohlachse ausgebildet ist.

Bei höheren Laufgeschwindigkeiten von Breitstreckwalzen muß zur Gewährleistung einer erforderlichen Trocknung der Bahnen die Heizleistung erhöht werden, wodurch wiederum eine höhere Erwärmung der Kugellager in Kauf genommen werden muß. Daher ist für eine Dauerbelastung bei einer höheren Laufgeschwindigkeit und damit verbunden einer höheren Heizleistung eine Kühlung der Lager unbedingte Voraussetzung, damit Stillstandszeiten der Breitstreckwalze durch ein Heißlaufen vermieden werden. Eine Möglichkeit zur Abhilfe besteht darin, daß eine relativ teure Fettschmierung mit einem Spezialfett vorgenommen wird. Hierfür sind aber die Kosten des Fettes sehr beträchtlich.

So ist aus der den Oberbegriff des Hauptanspruchs bestimmenden DE 36 13 494 A1 bekannt, den Wälzlagern Schmierstoffzuführungsleitungen zuzuordnen, mit deren Hilfe eine problemlose Nachfettung der Wälzlager möglich ist, wodurch ungewollte Stillstandszeiten infolge übermäßiger Erwärmung der Wälzlager vermieden werden sollen.

Es sind bereits Ausführungen bekannt, bei denen durch den Hohlraum der Achse ein kühlender Luftstrom geblasen wird und dadurch die Kugellager gekühlt werden sollen. Durch diese Innenkühlung der Kugellager tritt an der Außenseite der Breitstreckwalze nur eine abschnittsweise Kühlung auf.

Es sind des weiteren Breitstreckwalzen bekannt, bei denen im Hohlraum der Achse ein kühlender Wasserstrom geführt ist. Auch bei dieser Innenkühlung der Kugellager wird nur eine abschnittsweise Kühlung erreicht. Es gibt nun Anwendungsfälle, insbesondere bei einer Anordnung der Breitstreckwalze im Bereich äußerer warmer Zonen, z. B. bei Anordnung von Infrarotstrahlern mit einer Umgebungstemperatur von bis ca. 200 $^\circ$C, wo die Erreichung einer gleichmäßigen Temperatur an der Außenseite der mit einer Innenkühlung versehenen Breitstreckwalze zweckmäßig und förderlich ist, insbesondere zur Bildung eines Kondensfilms, der als Trennfuge zwischen der Breitstreckwalze und dem zu trocknenden Gut dient.

Aus der DE-AS 27 56 745 ist es bereits bekannt, zur Verbesserung des Temperaturübergangs in Nuten eines Walzenmantels einen Wärmeleiter einzubringen, der durch ein Metallpulver oder ein Metallprofil gebildet ist, wobei der Wärmeleiter aus Kupfer, Bronze oder Aluminium bestehen kann.

Um bei dieser Ausführung einen zufriedenstellenden Wärmeübergang zu erreichen, müssen möglichst gleichmäßig als zusätzliche Maßnahme in die Innenseite des Walzenmantels Nuten eingebracht werden. Eine solche Ausführung ist nicht nur aufwendig, sondern kann auch nur bei bestimmten Walzen zur Ausführung gelangen.

Der Erfindung liegt die Aufgabe zugrunde, eine Breitstreckwalze der aufgezeigten Gattung so auszubilden, daß die vom Hohlraum der Achse ausgehende Kühlung weitgehend gleichmäßig auf die Außenseite der Breitstreckwalze übertragbar ist, wobei zur Verbesserung des Temperaturübergangs an der Walze keine baulichen Veränderungen oder Eingriffe erforderlich sind.

Diese Aufgabe wird erfindungsgemäß dadurch gelöst, daß konstruktiv bedingte Hohlräume zwischen den Rohrabschnitten und der Hohlachse durch ein gut wärmeleitfähiges Material ausgefüllt sind, welches in Form eines dem jeweiligen Hohlraum angepaßten Formteils ausgebildet sein kann. In Ausgestaltung der Erfindung wird als leitfähiges Material Aluminium eingebaut.

Durch die erfindungsgemäße Ausbildung der Breitstreckwalze wird eine gleichmäßigere Kühlung auf der Außenseite und damit durch die eintretende Temperaturdifferenz ein annähernd gleichmäßiger Kondensfilm erreicht. Die Intensität dieses Kondensfilms wird primär beeinflußt durch die Umgebungstemperatur der Breitstreckwalze und läßt sich durch Veränderung der Temperatur und der Strömungsgeschwindigkeit des Kühlmediums nahezu konstant halten.

Ein Ausführungsbeispiel der Erfindung ist in der Zeichnung dargestellt und wird nachfolgend näher erläutert. Es zeigt:

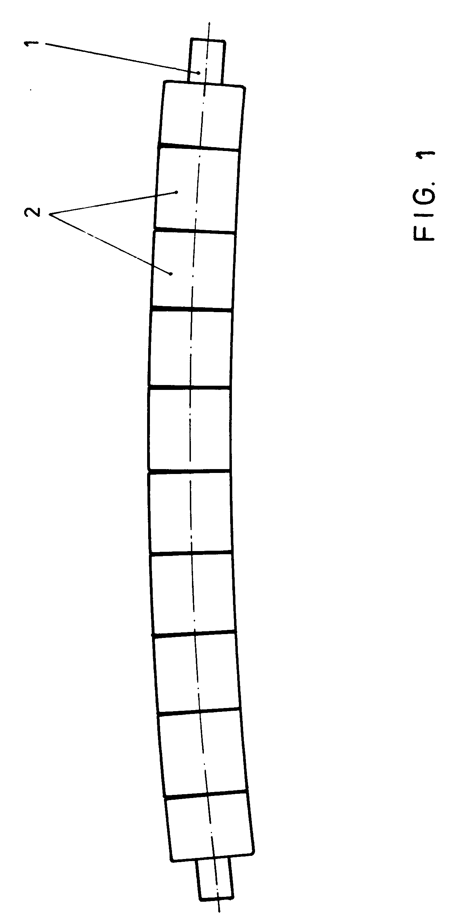

Fig. 1 eine gebogene Breitstreckwalze in der Ansicht;

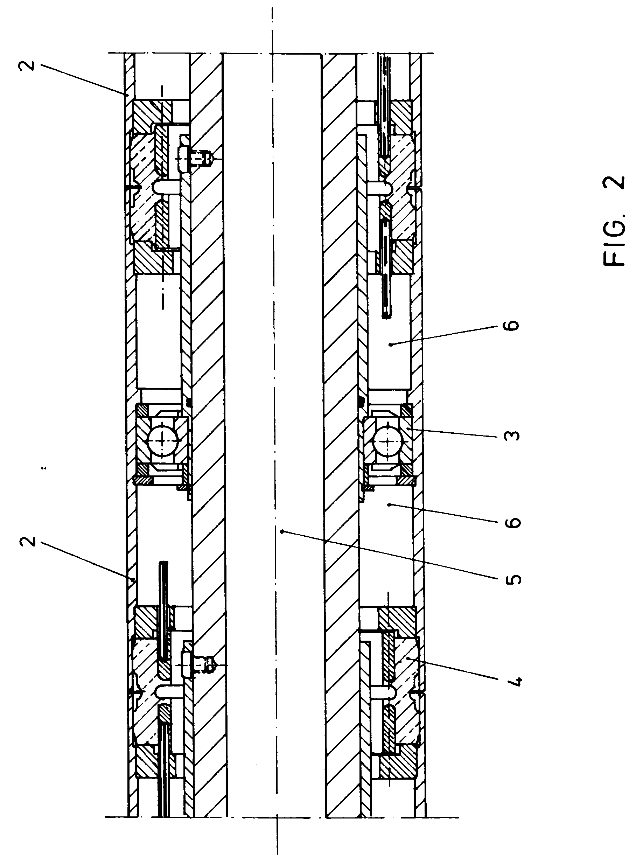

Fig. 2 einen Teil-Längsschnitt durch eine Breitstreckwalze;

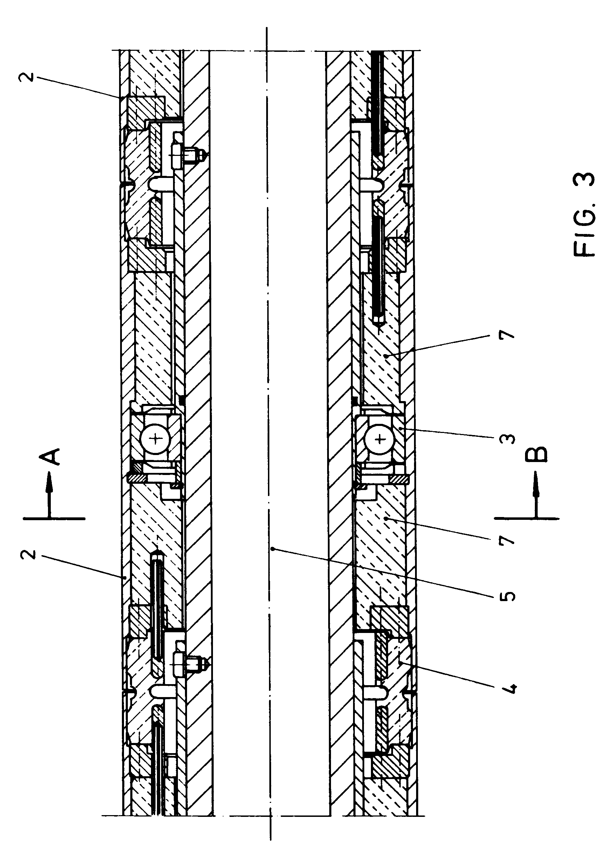

Fig. 3 wie Fig. 2, jedoch mit eingebautem Wärmeleitmaterial und

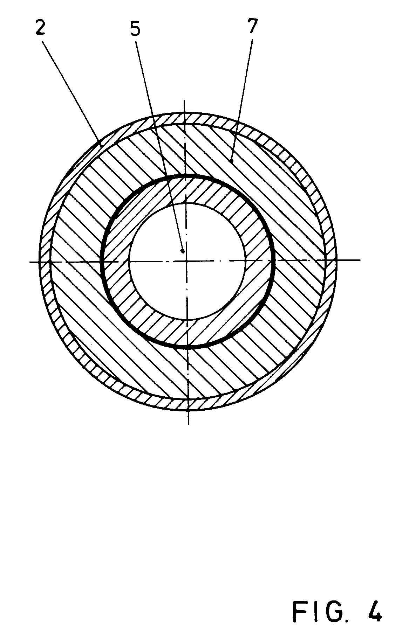

Fig. 4 einen Schnitt A - B nach Fig. 3.

Auf einer gebogenen Achse 1 sind in geringem Abstand Rohrabschnitte 2 angeordnet, die auf flexiblen Stützringen 4 lagern. Die Rohrabschnitte 2 sind über Wälzlager 3 auf der Achse 1 abgestützt. Die Achse ist zur Führung eines Kühlmediums als Hohlachse 5 ausgebildet. Die konstruktiv bedingten Hohlräume 6 sind durch ein gut wärmeleitfähiges Material 7 ausgefüllt. Dieses wärmeleitfähige Material 7 ist in Form eines dem jeweiligen Hohlraum 6 exakt angepaßten Formteils aus Aluminium einge-

baut.

Aufstellung der Bezugzeichen:

1     gebogene Achse
2     Rohrabschnitt
3     Wälzlager
4     flexibler Stützring
5     Hohlachse
6     Hohlräume
7     wärmeleitfähiges Material

## Patentansprüche

1. Breitstreckwalze, insbesondere für die Behandlung von Textil-, Papier- oder Kunststoffbahnen, bestehend aus einer gebogenen Achse (1) und auf dieser Achse in geringem Abstand angeordneten Rohrabschnitten (2), die auf flexiblen Stützringen (4) lagern und über axial zwischen den Stützringen (4) angeordnete, auf der Achse (1) fixierbare Wälzlager (3) auf der Achse (1) abgestützt sind, wobei die Achse (1) zur Führung eines Kühlmediums als Hohlachse ausgebildet ist, dadurch gekennzeichnet, daß konstruktiv bedingte Hohlräume (6) zwischen den Rohrabschnitten (2) und der Hohlachse (5) durch ein gut wärmeleitfähiges Material (7) ausgefüllt sind.

2. Breitstreckwalze nach Anspruch 1, dadurch gekennzeichnet, daß das wärmeleitfähige Material (7) in Form eines dem jeweiligen Hohlraum (6) angepaßten Formteils ausgebildet ist.

3. Breitstreckwalze nach Anspruch 1 oder 2, dadurch gekennzeichnet, daß das leitfähige Material (7) Aluminium ist.

## Claims

1. Broad-drawing roller, especially for the treatment of textile, paper or synthetic material webs, consisting of a curved axle (1) and pipe sections (2) arranged on this axle in close spacing, which sections are mounted on flexible support rings (4) and supported on the axle (1) by roller bearings (3) arranged axially between the support rings (4) and fixable on the axle (1), wherein the axle (1) is constructed as hollow axle for the guidance of a cooling medium, characterised thereby that constructionally caused hollow spaces (6) between the pipe sections (2) and the hollow axle (5) are filled by a material (7) with good heat conductivity.

2. Broad-drawing roller according to claim 1, characterised thereby that the heat conductive material (7) is constructed in form of a shaped part matched to the respective hollow space (6).

3. Broad-drawing roller according to claim 1 or 2, characterised thereby that the heat-conductive material (7) is aluminium.

## Revendications

1. Cylindre, notamment pour le traitement de bandes de textile, papier ou matière plastique, constitué d'un axe bombé (1) et de sections de tube (2) disposées sur cet axe avec un faible écartement, qui reposent sur des bagues d'appui (4) flexibles et qu'on dispose axialement sur l'axe (1) sur des paliers (3) qu'on peut fixer sur l'axe (1) entre les bagues d'appui (4), l'axe (1) étant exécuté en axe creux pour faire passer un milieu de refroidissement, caractérisé en ce que les espaces creux de construction (6) entre les sections de tube (2) et l'axe creux (5) sont remplis par un matériau (7) de bonne conductivité thermique.

2. Cylindre selon la revendication 1, caractérisé en ce que le matériau (7) conducteur de la chaleur (7) prend la forme d'une pièce moulée adaptée à chaque espace creux (6).

3. Cylindre selon la revendication 1 ou 2, caractérisé en ce que le matériau conducteur est de l'aluminium.

FIG. 1

FIG. 2

FIG. 3

EP 0 321 892 B1

FIG. 4